# EUROPEAN PATENT SPECIFICATION

(11) **EP 3 112 900 B1**
(45) Date of publication and mention of the grant of the patent: **28.08.2019**
(21) Application number: 16177684.4
(22) Date of filing: 04.07.2016
(51) Int. Cl.: G01S 17/02, G01S 17/88, G01S 7/40, G01S 7/48, G01S 7/497, G01S 13/86, G01S 13/88

(54) **SAFETY SYSTEM AND METHOD TO DETECT A RISK CONDITION IN A REGION TO BE MONITORED PLACED CLOSE TO AN OPERATING MACHINE, SUCH AS A DRILLING MACHINE OR THE LIKE**
SICHERHEITEINRICHTUNG UND VERFAHREN ZUR ÜBERWACHUNG EINER REGION IN DER NÄHE EINES APPARATES, Z.B., EINER BOHRMASCHINE
SYSTEME ET METHODE POUR DETECTER UN DANGER DANS UNE REGION A SURVEILLER PROCHE D'UNE MACHINE, PAR EXEMPLE, UNE MACHINE DE FORAGE

(30) Priority: 03.07.2015 IT UB20151930
(43) Date of publication of application: 04.01.2017
(73) Proprietor: Soilmec S.p.A., 47522 Cesena (IT)
(72) Inventor: ZANOLINI, Pieandrea Primo, 25060 CELLATICA (IT); LUISON, Devis, 31030 CASTELLO DI GODEGO (IT); AGOSTINI, Luca, 36050 QUINTO VICENTINO (IT); POZZI, Matteo, 47522 CESENA (IT)
(74) Representative: Vitillo, Giuseppe

(56) References cited:
- EP-A1- 0 577 491
- EP-A1- 1 061 487
- EP-A2- 1 482 238
- WO-A1-2011/130861
- DE-A1- 19 709 799
- US-A1- 2003 168 288

## Description

### Technical field

The present invention relates to a safety system and method for detecting a risk condition in a region close to an operating machine, such as a drilling machine or the like.

### Background art

Several types of safety systems and method are known for the protection of an operating machine, e.g. a drilling machine.

Among the safety systems and methods currently available on the market there are from protection cages and/or from safety ropes that ensure operator safety and accident prevention in the presence of moving and/or rotating parts.

Protection cages generally comprise a pair of reclosable shutters or doors that typically prevent any undesired contact between the operators and moving parts of an operating machine. In the particular case of drilling machines, the use of protection cages installed around the dangerous area has become established over the years, generally around the mast or, more generally, around the areas where drilling is taking place.

The shutters or doors of the protection cages are usually provided with sensors and limit switches that signal in a "passive" way the open condition and the properly closed condition of the cage, disabling the normal operations of the apparatus in particular situations: if the operator opens the shutters or doors, the limit switches will signal the open condition, and the control system will interpret such a condition as a potential risk situation. The control system will then issue an emergency signal or stop the machine movements. With particular reference to the field of drilling machines, the system can be programmed for allowing reactivation with open shutters or doors only in a so-called "restricted" mode, i.e. with revolution speed and carriage speed limitations in accordance with the values defined by applicable regulations.

However, the use of protection cages has a few drawbacks.

One drawback is that protection cages are rather heavy and bulky, and therefore difficult to use. Moreover, protection cages cannot be used when the drilling system has to operate in proximity to obstacles, walls, buildings, or in horizontal or sub-horizontal modes. In such cases, in fact, the protection cage is a mechanical obstacle that hinders the proper operation of the apparatus, and is therefore normally removed, thus reducing the effectiveness of the safety system or even making it wholly ineffective. Therefore, such systems limit the versatility of the drilling machine and increase manoeuvering times and difficulties for the operator, thus reducing the productivity of the machines. Operators very often remove the safety protection for this very reason, thus increasing the risk of (serious) accidents.

In addition to the above, protection cages also have some operating limitations and are often subject to reliability problems, such as, in particular:
a) the limit switches are close to the excavation area and are therefore subject to fouling from drilling debris, i.e. concrete, high-pressure water, earthy detritus, etc., which might cause them to fail;
b) the systems can be easily tampered with by the personnel;
c) the presence of the protection cage limits the possibility of positioning the mast near obstacles such as: walls, pillars, gradients, etc. because of interference with the cage;
d) a special operating mode (the so-called "restricted mode") needs to be available for working without the protection cage, which mode is however subject to the operators' decisions, who theoretically may bypass the safety system even in situations not taken into account in the special modes. In the current state of the art, said special mode implies production limitations: hold to run commands, limited distance for remote control operation due to the imposition of locking the remote control in a fixed position to prevent the operator from reaching a dangerous area;
e) the above-mentioned large dimensions of the protection cage also make the latter easily subject to damage;
f) the movements of the drilling machine are *de facto* limited by its dimensions, so that some types of work cannot *de facto* be carried out (e.g. low tie rods);
g) the weight of the protection cage reduces the manoeuvrability and stability of the drilling machine, resulting in higher energy consumption.

On the other hand, safety or emergency ropes are generally placed near the moving parts of an operating machine; in the event of contact with an operator, they will block said moving parts to prevent an accident. In the field of drilling machines, in particular, such safety ropes are widely used for protecting the operators and are situated in proximity to *the mast.*

The idea at the basis of this operating principle is that, should an operator remain trapped in the moving parts of the operating machine (in particular, the rotary parts of a drilling machine), he will necessarily in contact with the safety ropes, thereby stopping the rotation and pull/thrust operations. This situation may also occur in the so-called "restricted mode" of a drilling machine. The safety ropes are in fact so positioned that, should the operator be pulled by the turning part, the operator will hit the rope, thus opening the circuit and completely stopping the function of the machine.

However, safety ropes also suffer from a few drawbacks.

One drawback is that they are subject to reliability problems over time and are often a cause for false alarms due to sensor wear. Moreover, in some cases the operator may become entangled in the rotary part and suffer an accident without however triggering the safety ropes, or he may trigger the ropes only after having come in contact with the rotary part.

In addition to the above, with particular reference to the field of drilling machines, safety ropes have the following disadvantages:
a) the safety rope will not prevent the operator from getting trapped in the moving parts, since it will only intervene when the risk condition has already occurred;
b) safety ropes and their tension sensors are subject to high mechanical wear, mainly due to vibrations;
c) the system may often be triggered undesirably because excavation material extruded from the hole at high speed may hit and trigger the safety rope, thus stopping the operation of the drilling machine prolonging the processing times.
d) the sensors for detecting human presence in the working area of the drilling machine are often installed in positions that are much exposed to dirt and processing residues;
e) they are often triggered repeatedly because of their vicinity to the working area (stones, flexing, and unintentional triggering by the operator);
f) they are difficult to install on existing drilling machines, in that the mounting position depends on the characteristics of the sensor;
g) the protection offered by safety ropes is rather rigid because of lack of adaptation to the surrounding environment;
h) if the operator needs to come closer, they require the use of the so-called "restricted mode";
i) protection is not normally ensured only in areas with small dimensions and orientation;
j) the configuration and positions of the sensors change according to the length of the *mast;*
k) the protected zone is not clearly identifiable or signalled by the system.

Patent application EP 1 482 238 describes a safety system that does not use protection cages or safety ropes. Instead, such a system employs video cameras for monitoring the access and approach of a person to the working area of a machine, more in particular a drilling machine. Therefore, the invention relates to an automatic vision system including at least two video cameras, which can discriminate the presence of one or more persons in the dangerous area.

However, such a system also has several drawbacks. As a matter of fact, due to their very nature, systems that make use of video cameras or image sensors provide data that can hardly be interpreted by automatic systems, since images may be easily affected by environmental conditions, by light and shadows, by factors like rain, humidity and dust, by occlusions, i.e. obstacles that may become interposed between the video camera and the target, and, last but not least, by the difficulty in obtaining information in a three-dimensional space by using vision systems, which notoriously project the images onto a flat sensor, thus reducing the possibility of actual identification of a dangerous situation. Those systems that make use of vision only are usually not very reliable and, in the best case scenario, imply the generation of many *"false positives",* i.e. they signal the presence of people in the monitored area even when this is not true.

In the art are known some devices or methods as described in their respective documents.

For example, EP 1482238 A2 discloses a safety device for an operating machine, comprising visual recording means to acquire digital images of a pre-determined area surrounding an operating member of the operating machine, and processing means to receive and process the digital images acquired by the visual recording means in order to discriminate the movement of shapes in the area and to send intervention signals to the command system of the operating machine in the event that a condition of danger is detected. The visual recording means comprise two digital visual means arranged reciprocally at a much smaller distance with respect to the size of the area to be controlled. The two visual means are oriented in the same direction and determine the distance of the object identified from the view point with respect to a background plane in order to recognize whether the object is moving or stationary. The device has two visual recording units e.g. digital TV camera, arranged reciprocally at a much smaller distance with respect to a size of a surrounding area to be controlled. The visual units are oriented in the same direction and determine a distance of an object e.g. drilling unit, identified from a view point with respect to a background plane for recognizing whether the object is moving/stationary.

WO 2011/130861 A1 discloses a system and a method for generating a proximity warning. Based on two different sensing principles proximate objects can be detected by respective monitoring devices. The warning system is designed such that each monitoring device issues a warning via a common output device.

According to EP 1061487 A1, the monitored region is monitored by image signal generating means such as video cameras in order to obtain a succession of images of the bodies present in the monitored region, each image corresponding to a defined instant. The images are processed in such a way as to obtain, for each instant considered, a volumetric map of each body present in the region. This map, which identifies characteristics of shape, position, volume and dimensions of the body to which it refers, is processed in order to extract from it at least one parameter selected from the following group: escriptors of shape and volume, such as the volumetric map itself, the co-ordinates of position and the dimensions of each body to which the volumetric map refers. The parameter or a succession of values of the parameter obtained in this way is then compared with at least one model of these characteristics stored in a processing unit. Depending on the outcome of this comparison operation, a procedure of surveillance and/or reporting may be selectively activated. The solution is applicable, for example, to the automatic monitoring of museum environments, e.g. to ensure that visitors do not come too close to an exhibited work, or to the monitoring of industrial environments, e.g. to ensure that an operator does not come too close to a dangerous machine or process.

DE 19709799 A1 discloses a video monitoring system for monitoring a surface. Said system comprises a video camera which optically monitors the surface from a particular angle of view and an evaluation unit. In addition, it provides for video means, in particular a second video camera for optically monitoring the same surface from a different angle of view. The evaluation unit is designed to process the stereoscopic video information obtained from the two angles of view into groups of three-dimensional video image signals and to compare same with corresponding groups of reference signals of a three-dimensional reference model. By using two video cameras which simultaneously monitor an overlapping video image section, relevant objects can be distinguished far more effectively from disturbance variables. It is also possible to detect not only moving but also immobile objects.

According to EP 0577491 A1, a three-dimensional, geometric reference model of the said scene is constituted associating, with each scene, corresponding points in the field of at least two sensors placed at a distance from one another and sensitive to a radiometric parameter (such as the brightness) of the scene. The real scene is periodically synthesized on the three-dimensional geometric model, on the basis of each of the representations thereof which are supplied by the sensors. On that basis, the synthesized scenes are compared to each other in order to reveal discrepancies due to a modification of the 3D model which are of a size greater than a defined value.

US 2003/168288 A1 discloses an apparatus and a method for monitoring an elevator door include a sensor for detecting three-dimensional image information. Processing equipment evaluates the image information of detected images to recognize a deviation between two images and trigger a situation-adapted reaction. The sensor includes a light source mounted in the region of the elevator door so that the elevator door is disposed at least partly in the illuminated region of the light source. In addition, the sensor includes a sensor group mounted so that it receives light reflected from the door.

### Summary of the invention

It is one object of the present invention to provide a safety system and method which can overcome the drawbacks of the prior art, while at the same time being simple and economical to manufacture.

According to the present invention, this and other objects are achieved through a system and a method having the features set out in the appended independent claim.

It is to be understood that the appended claims are an integral part of the technical teachings provided in the following detailed description of the invention. In particular, the appended dependent claims define some preferred embodiments of the present invention, which include some optional technical features.

For completeness' sake, the following will summarize some of the advantageous aspects that can be obtained from preferred and optional features of the present invention.

The system can also be used in the presence of abundant dust, mud, water, foam and drilling mud jets, since the sensors are located on the upper part of the mast.

The system according to the present invention can be easily applied and adapted to outside environments even in the presence of large temperature, sun exposure, wind and rain variations.

In addition, the system obtained in accordance with the present invention is not vibration-sensitive, also because of the use of suitable electronic and mechanical compensation devices (accelerometers).

The system according to the invention requires no mechanical barriers, such as protection cages or safety ropes. For this reason, the *mast* can be brought closer to the working area even in the presence or vicinity of natural obstacles, variable slopes or walls. The system can discern between men and objects like excavation materials moving in the area identified as dangerous: stones, mud, earth, dust.

Furthermore, the safety system can discriminate between a man moving in the dangerous area and the moving parts of the machine, such as the pipe loaders, the ropes of the service drawworks, and the drilling and/or consolidation equipment.

Thanks to the use of different types of sensors in combined form, the safety system can distinguish a person moving in the dangerous area in spite of the presence of thick dust or heavy rain and glare generated by the sun or other light sources.

Furthermore, the safety system can detect the presence in the area of personnel wearing protective gear such as safety helmets, heavy garments, reflective jackets.

Advantageously, the safety system is flexible and can be adapted to variable working conditions such as: vertical operation, horizontal operation, tie-rod operation, oblique operation, and mixed condition that cause changes in the dangerous area.

Moreover, the safety system can detect human presence in the dangerous area even in poorly lit conditions.

The safety system can discern between the presence of an individual and similar shapes of mechanical parts of the machine or other mechanisms, so that it may deny access to the former while allowing access to the latter, with clear advantages during the drill pipe change operations.

The safety system can determine and discern the growth of the heaps of excavation material; because of this, it will not issue any false alarms that would otherwise stop the drilling machine.

The safety system also makes it possible to divide the area into several zones with increasing alarm levels.

Due to the improved reliability of the safety system, undesired downtime is reduced, while the safety of the operating machine with which the system is associated is increased.

Thanks to the safety system, it is possible to speed up the drilling operations compared to the use of a protection cage.

When using the safety system of the present invention, additional controls for activating the so-called "restricted mode" (required by current regulations) will no longer be necessary, since there will be no additional bulky parts represented by protection cages. In this manner, the drilling area can be reached by fully exploiting the versatility of the drilling machine in any configuration of the same.

### Brief description of the drawings

Further features and advantages of the present invention will become apparent from the following detailed description, which is supplied by way of non-limiting example with particular reference to the annexed drawings, wherein:
- Figure 1 is a block diagram of a safety system designed in accordance with an exemplary embodiment of the present invention;
- Figure 2 is a further block diagram showing some implementation details of the system shown in Figure 1;
- Figure 3 shows a couple of views including a side elevation view and a top view of an operating machine, in particular a drilling machine, that incorporates the system shown in the preceding figures; and

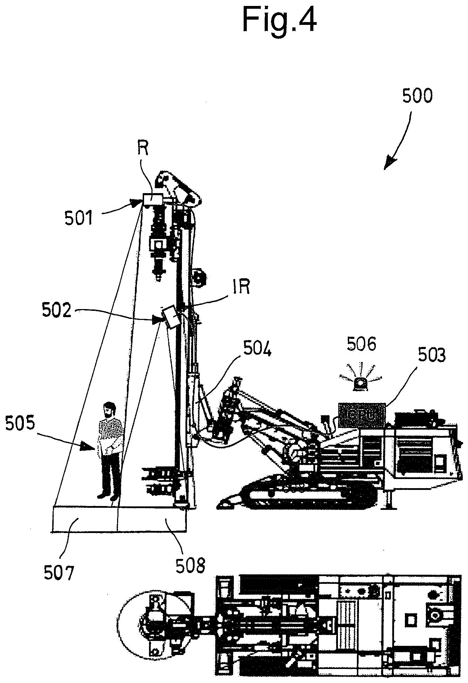

- Figure 4 shows a couple of views including a side elevation view and a top view of an operating machine, in particular a drilling machine, that incorporates a safety system in accordance with a further embodiment of the present invention.

### Detailed description of the invention

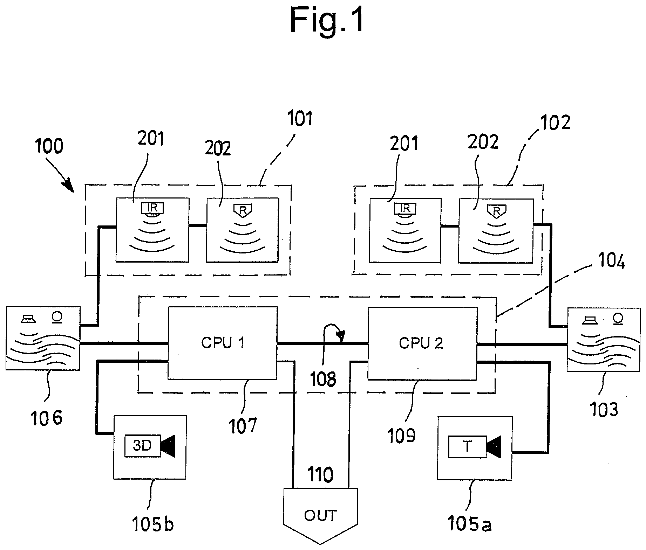

With reference to Figures 1 to 3, there is shown a safety system for detecting a risk condition in a region close to an operating machine. Such a system is designed in accordance with an exemplary embodiment of the present invention.

The system, designated as a whole as 100, is suitable for use in an operating machine equipped with a support structure on which an operating apparatus is mounted, which is typically fitted with one or more moving parts capable of carrying out a task.

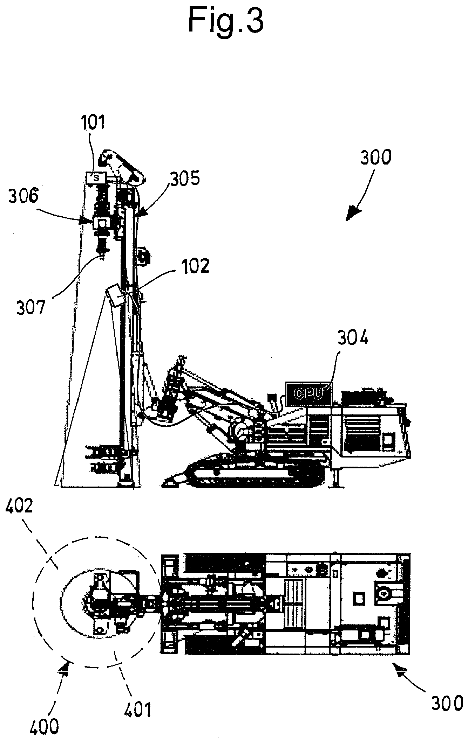

In the embodiment illustrated in particular in Figure 3 said operating machine is a drilling machine 300. However, in further variant embodiments said operating machine may be different, in that system 100 can also be used in contexts other than drilling.

In the exemplary embodiment shown herein, the support structure comprises a *mast* 305, along which a rotary table or *rotary* 306 is slidably mounted in a guided manner, while the operating apparatus comprises a drilling tool 307 rotatably driven by rotary 306, which in particular is situated at the distal end of a set of drill pipes (not numbered).

As will be described more in detail below, system 100 comprises, for example, sensor means adapted to be mounted on mast 305 (or also on rotary 306) of drilling machine 300 and suited to detect data representing the presence of a foreign object (e.g. a person) located in a region 400 to be monitored in proximity to drilling tool 307 of a set of drill pipes possibly associated therewith. As an alternative, as will be apparent to a man skilled in the art, the sensor means may be mounted on other portions of machine 300.

System 100 further comprises control means 104 configured to process the data provided by the sensor means and to provide a control signal, should said data correspond to a risk condition concerning the presence of the object in region 400 to be monitored.

In particular, in the illustrated embodiment the sensor means comprise a pair of distance detector assemblies 101, 102 (essentially for redundancy reasons) configured to detect data representing the distance of said object and of setting elements located in said region 400 to be monitored relative to said distance detector assemblies 101, 102. In further variants, it is also conceivable that the sensor means comprise only a single distance detector assembly.

The setting elements essentially are the obstacles that are normally present during the normal activity of machine 300 in region 400 around drilling tool 306 and around the set of drill pipes that may possibly be associated therewith. For instance, such obstacles may include walls, excavation debris, etc.

Furthermore, control means 104 preferably comprise a pair of processing units 107 and 109 (essentially for redundancy reasons), which may operate as autonomous or coordinated units. In further variant embodiments, however, the control means may include just one processing unit.

In the illustrated embodiment, control means 104 are configured to:
- calculate an estimation of the volume occupied by said object (e.g. the operator) and by the setting elements as a function of said data,
- compare the calculated estimation and a preliminarily stored three-dimensional model concerning the volume normally occupied by the setting elements without the presence of the object, and
- assess whether between the calculated estimation and the three-dimensional model there is a variation corresponding to a risk condition according to predetermined criteria.

In the illustrated embodiment, system 100 can detect the entry and approach of people within a predetermined volume, through the use of physical quantity sensors and other technologies.

In the illustrated embodiment, control means 104 including processing units 107 and 109 are connected to distance detector assemblies 101, 102 for conditioning and processing the detected signals.

Advantageously, each one of distance detector assemblies 101, 102 in use comprises at least one sensor selected from the group including an infrared sensor, a radio wave sensor, an ultrasound sensor and a radar sensor. Preferably, each one of distance detector assemblies 101, 102 comprises a pair of distance sensors of a different type. Preferably, one of such sensors is an infrared sensor 201, while the other one is a radar sensor 202.

The sensor means may also include, in addition to distance detector assemblies 101, 102, at least one of the following sensors: a two-dimensional video camera 105a, a three-dimensional video camera 105b, a vision system 103 sensitive to visible light 103, and a further vision system 106 sensitive to infrared radiation (thermographic). Such sensors may operate individually or in cooperation with other sensors and also with distance detector assemblies 101, 102.

In the illustrated embodiment, the use of control means 104 - preferably equipped with one or more processing units 107, 109 - allows collecting, conditioning and interpreting the data obtained by the first distance detector assembly 101 and/or by the second distance detector assembly 102. Control means 104 allow, in particular, discriminating the presence of people within region 400 to be monitored. Through the first distance detector assembly 101 and/or the second distance detector assembly 102, control means 104 can be configured to simultaneously assess the approaching speed and the corresponding dimensions of the object moving within region 400 towards drilling tool 307 and the set of drill pipes possibly associated therewith.

In particular, the control means receive the data coming from distance detector assemblies 101 and 102, and process them in order to detect any human presence in the vicinity of or within region 400 to be monitored, so as to be able to control at least one of the following actions:
- provide a perceivable signal (e.g. lights and/or sounds, etc.), and
- changing the mode of operation of drilling tool 307 and of the set of drill pipes possibly associated therewith, and
- interrupting the operations being carried out by operating machine 300, e.g. for accident prevention purposes.

Furthermore, system 100 comprises a communication channel, e.g. a bus 108, for data exchange between detector assemblies 101 and 102 and processing units 107 and 108, and also - advantageously - for the execution of the safety and control functions that ensure the proper operation of the system.

Optionally, system 100 may also comprise a warning device 110 configured to signal the presence of the risk condition, corresponding to an alert or danger situation. Warning device 110 is controlled by control means 104 - which preferably comprise the pair of processing units 107 and 109.

According to one possible implementation of the system of the present invention, warning device 110 may be configured to interact with control 304 of drilling machine 300 in order to take the necessary warning and/or accident prevention actions. As an alternative, warning device 110 may be independent of control 304 and be adapted to emit a signal perceivable by any operators standing near monitored region 400. For example, warning device 110 comprises at least one of an audible warning apparatus and/or a visual warning apparatus.

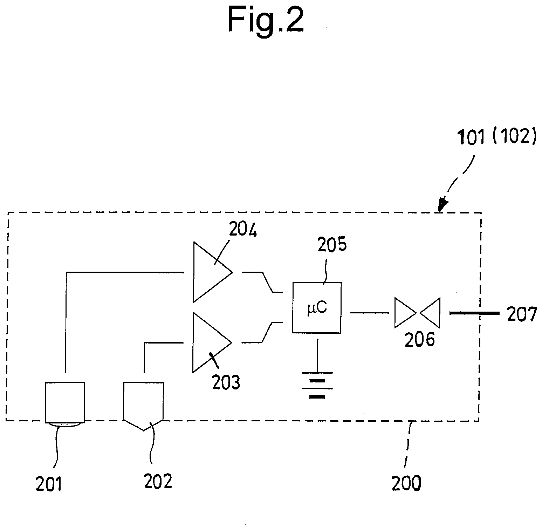

As can be seen in Figure 2, in the illustrated embodiment each one of distance detector assemblies 101 and 102 may be implemented on a separate module, e.g. comprising a single electronic board 200. Preferably, each one of said modules may include at least one distance sensor or - more preferably - the pair of distance sensors 201 and 202 of the above-described type. In this example, each one of said modules comprises also amplifiers 203, 204 for conditioning the signals received from distance sensors 201 and 202, a microcontroller unit 205 for preliminarily processing the signals coming from amplifiers 203, 204 and for extracting the data, and a transceiver device 206 and associated connector 207 for connection to bus 108.

As aforementioned, distance detector assemblies 101, 102 may preferably be positioned on at least one element selected from mast 305 and rotary 306. As an alternative, said distance detector assemblies 101, 102 may be mounted in another position of drilling machine 300. Advantageously, each one of distance detector assemblies 101, 102 is mounted at an adequate distance for preventing them from being hit by the drilling debris and for covering entire region 400 to be monitored.

By way of example, distance detector assemblies 101, 102 are installed in system 100 in a predetermined position and/or at a predetermined mutual distance, with a predetermined orientation with respect to the area to be monitored. With said detector systems a position sensor assembly (not numbered) is associated, which is configured to detect if, during the operation of system 100, the position and/or distance and/or orientation of distance detector assemblies 101, 102 are different from the predetermined ones. In this manner, it is possible to signal to system 100 whether the detections made by assemblies 101, 102 are correct or they have been mutually displaced to such an extent as to impair the reliability of such detections. As an alternative, a respective actuator (not shown) may be associated with one or both distance detector assemblies 101, 102 for moving a corresponding distance detector assembly 101, 102, so that their mutual position and/or distance and/or orientation will correspond to a predetermined mutual position and/or distance and/or orientation. In such a variant there is a position sensor assembly (not shown) adapted to control said at least one respective actuator in such a way as to maintain the mutual position and/or distance of said assemblies 101, 102 equal to a predetermined mutual position and/or distance and/or orientation. For example, said position sensor assembly may comprise an angular sensor or encoder.

As will be apparent to a man skilled in the art, the number, position and composition of distance detector assemblies 101, 102 can be defined as field function of the required coverage, the length of mast 305, and the necessary distance from the excavation area for ensuring the proper operation of distance detector assemblies 101, 102 in region 400 to be monitored.

As aforementioned, distance detector assemblies 101, 102 (and, more in general, the sensor means) are connected to control means 104, which collect and interpret the distance signals (possibly combined with other signals and readings obtained from the sensor means) for the preliminary generation of a three-dimensional model of the setting elements around region 400 that needs to be monitored. In particular, one set of physical parameters detected by the sensor means correspond to each point of the three-dimensional model.

In the illustrated embodiment, region 400 to be monitored in proximity of drilling tool 307 and the associated set of drill pipes comprises two detection areas 401, 402, e.g. contiguous to each other (particularly, but not necessarily, concentric to each other). In the case wherein the sensor means of system 100 also include optional video cameras 105a, 105b, such detection areas 401, 402 may be visible on a suitable control monitor situated in a remote position.

Preferably, the first detection area 401, which is the outermost one, farthest from drilling tool 307 and the associated set of drill pipes, is, for example, an alert area, where the entry or approach of a person will trigger an alert condition, without however stopping the drilling operations.

Preferably, the second detection area 402, which is the innermost one, closest to drilling tool 307 and the associated set of drill pipes, is preferably a danger area, where the entry of a person will trigger a danger condition that will unmistakably require the drilling operations to stop.

Therefore, the risk condition detected by system 10 may be:
- an alert condition, when control means 104 determine that a person is within alert area 401 of region 400 to be monitored,
- a danger condition, when control means 104 determine that a person is within danger area 402 of region 402 to be monitored.

As aforementioned, the operators can be warned by means of luminous indications or through the emission of increasingly intense sounds as the operator approaches danger area 402 from the alert area 401. The size and orientation of areas 401, 402 may of course vary depending on the operating conditions. In particular, in the presence of particular environmental conditions, system 100 may modify the size of the detection areas according to specific conditions that may be set beforehand by the user or detected automatically by the system.

Thanks to the features that will be described below, system 100 can estimate the speed of motion or approach of people moving within detection areas 401, 402. This aspect allows system 100 to act upon the controls of drilling machine 300 in a safe and controlled manner, for the purpose of preventing any potential dangerous situation from occurring. In particular, the strategy and response time of the safety system can preferably be determined also from kinematic parameters describing the motion of individuals that may potentially be present in the detection area.

In the illustrated embodiment, as aforementioned, system 100 can also generate, upon each activation, the three-dimensional model of the setting elements that are present in the surrounding environment or region 400 to be monitored. This functionality, also referred to as background calculation, is provided by processing all the data coming from the sensor means, and allows making a calibration" in order to adapt the operation of system 100 to any kind of working environment or scenario. The setting elements detected during the calibration step will then be considered as normal by the safety system. When drilling machine 300 is in operation, instead, system 100 is configured to detect all variations from the three-dimensional model which are due to the presence of a foreign object, e.g. a moving person or animal, and, if necessary, to force a deactivation of the operating machine. This calibration step will thus be advantageous for allowing system 100 itself to learn the setting elements placed in the environment surrounding the operating apparatus. In this manner, any fixed obstacles within the operating area will be considered to be included in the setting or background elements, i.e. the surrounding background, and as such they will not be taken into account in the detection modes. Any difference relative to the setting or background elements will be assessed by the control unit and, if it is compatible with the presence of one or more persons in monitored region 400, it will be signalled as a potential risk condition, while possibly letting the controls of the operating machine define the actions that will need to be taken on the operating machine in case of danger.

In such an event, i.e. if the presence of one or more individuals is detected in the second area 402 of the region near the operating apparatus, system 100 will send a stop command to the device that controls machine 300, thereby causing the ongoing process to stop immediately. At any rate, once system 100 has completed the calibration, the drilling operations can only be activated upon the operator's consent.

According to a variant embodiment of the present invention, two background screening operations are carried out in succession. If the same three-dimensional model of the background is obtained from a comparison of said two successive operations, then system 100 will interpret such model as reliable and will then operate normally. Otherwise, system 100 will interpret the two models as unreliable and will not start the normal operation, but will carry out two further successive screening operations; this step will be repeated until such operations will result in the creation of the same model. It will thus be avoided that a wrong calibration is made because of parts moving within the setting. Any moving parts within the setting will imply differences in the three-dimensional models acquired during the two successive screening operations, and such differences will be detected during the comparison, leading to a restart of the calibration procedure. Normal operation will only be started after a comparison in which the reference model is recognized as reliable, i.e. when it is certain that all the elements of the model are in static conditions.

Processing units 107, 109 receive the data concerning the analog signals detected by the sensor means, analyze them, and compare them continuously with the three-dimensional model of the surrounding setting elements. In particular, processing units 107 and 109 assess any volume variations relative to the three-dimensional model in order to know if such variations are caused, for example, by the entry of an object having shape and motion similar to those of a person entering monitored region 400 and, more specifically, areas 401 and 402. Within such areas 401 and 402 the volumes of the static setting, i.e. the volumes of the setting elements belonging to the background, as well as those of the moving objects, are detected; such volumes are representative of the passing or approaching of an object towards the first detection or alert area 401 or towards the second detection or danger area 402. Based on the quantities (in particular, the distances) measured by the sensor means in such volumes processing units 107 and 109 can be configured to obtain information about the speed of the object and to discern people from fixed objects and/or debris produced by the operation of drilling machine 300.

Advantageously, but not necessarily, the reconstruction of the objects is obtained by using probabilistic analysis algorithms on the elements and by identifying "blobs" in a three-dimensional space, represented by means of Cartesian coordinates. Such algorithms are *per se* known to those skilled in the art, and will not therefore be described any further.

In the illustrated embodiment, the calculated volume of the object and of the setting elements, detected by the sensor means, is preferably represented by a set of points in the space, connected by means of a curved surface. Processing units 107 and 109 calculate - by comparison - the difference or variation existing between said calculated volume and the volume of the setting elements in the three-dimensional model. If said difference or variation corresponds to a predefined scheme stored in processing units 107 and 109, and concerns dimensions, characteristics and kinematic variations identifiable as or associable with a human being (possibly in motion), such processing units 107 and 109 will react by issuing an appropriate control signal. For example, said control signal may be a perceivable signal directly emitted by system 100 or a signal sent to drilling machine 300 in order to cause it to respond accordingly (e.g. by reducing the revolution speed of the set of drill pipes and of the drilling tool, or by inhibiting all operations being executed by said machine 300).

Preferably, every time a (moving) object that resembles a human figure is detected while entering or approaching the region around the operating apparatus, system 100 is configured to take different actions - under control of processing units 107 and 109 - depending on whether access has occurred in alert area 401 or in danger area 402, in particular in order to prevent accidents of whatever nature.

As aforementioned, system 100 may preferably signal the entry of an object resembling a (moving) human figure in alert area 401 by activating variable luminous and/or acoustic warning devices (e.g. an electroacoustic warning device, wherein the intensity of the sound emission is inversely proportional to the distance of the person from the innermost part of alert area 401).

Optionally, if system 100 detects that the object entering danger area 402 is similar to one or more (moving) persons, it will stop the dangerous functions (e.g. rotations and movements of the rotary).

For example, once the machine has stopped, the personnel will be allowed to restart the normal operation of such functions only after system 100 has detected the absence of any objects resembling persons within danger area 402.

However, if authorized personnel must remain within said area, restarting machine 300 may be allowed only in a so-called "restricted mode", e.g. with a revolution speed of less than 30 RPM and a pull or thrust speed under 15 m/min, in particular the restricted values matching those set forth by the regulations in force in the country where the machine is operating or being determined by yard safety measures.

Preferably, the different sensor means operate jointly, both for redundancy reasons and for ensuring a more reliable determination of risk conditions. In the illustrated embodiment it is therefore sufficient that even just one of distance detector assemblies 101 and 102 detects the presence of (moving) objects resembling people within monitored region 400 to trigger the interruption (or limitation) of the drilling operations, in particular to stop the rotation of the set of drill pipes and of drilling tool 307.

In particular, it has been found advantageous to use sensor means combining a plurality of sensor types. For example, ultrasound, microwave and infrared sensors may be used jointly to optimize distance detection in unfavourable conditions caused by dust, water and excavation materials.

In addition to detecting also some environmental conditions, such as the presence of rain, dust or fog, the use of multiple types of sensors will also promote correct acquisition and false-positive reduction, thanks to the presence and combined action of data processing algorithms.

Preferably, system 100 may be configured to make processing units 107, 109 capable of changing the size of the danger area (e.g. the width of alert area 401 and/or of danger area 402) according to climatic factors that may cause higher risks.

In the illustrated embodiment, processing units 107 and 109 communicate continuously with the sensor means: data acquisition and processing are therefore preferably continuous. In this manner, it will also be possible to detect any fault conditions immediately, e.g. cutting of signal transmission wires or a faulty sensor - which are preferably redundant and difficult to elude. In such a case, should any one of distance detector assemblies 101 and 102 not work correctly, then processing unit 107 and 109 will signal the anomalous condition that might otherwise bring on a danger situation and will stop the operations, while indicating that maintenance is necessary.

Preferably, a repeated non-activation of any one of distance detector assemblies 101 and 102 simultaneously with the activation of the other distance detector assembly 101 and 102 will be interpreted and signalled as a possible fault of the inoperative distance detector assembly 101 and 102.

Should the presence of an individual moving very quickly towards the danger area be detected, the system will be able to process such situations and to immediately stop any dangerous operations before the operator can enter the danger area and come in contact with the drill set.

Preferably, upon entry of an operator in the region near the operating apparatus within monitored region 400 (e.g. including alert area 401 and danger area 402) controlled by the sensor means, processing units 107 and 109 are configured to calculate the disturbance introduced into the vectorial representation associated with the stored three-dimensional model. This operation can advantageously be carried out by applying, without distinction, three-dimensional reconstruction algorithms based on flight time sensors, radar sensors, ultrasound sensors, infrared sensors, body tracking, statistical analysis, histogram control for normal or thermographic images, blob recognition, metric analyses. Such algorithms are *per se* known to those skilled in the art, and will not therefore be described any further.

Merely by way of non-limiting example, as regards reconstruction of 3D models starting from the data acquired by the sensors and any video cameras, the algorithms may include spatial and linear filtering and intensity transformations, frequency domain transformations, convolutions, deconvolutions, direct and inverse discrete Fourier transforms, slicing, smoothing and sharpening operations, and segmentations based on different levels of the measured signal. The control system may execute morphological transformations such as edge detection, extraction of connected components, interpolations, extraction of specific parameters and features, dilation, morphing, differential motion control, calculation of motion vectors and their offsets, histogram statistics and processing, model segmentation by centroid calculation, region connectivity, region statistics, identification of connected properties, colour processing, brightness intensity processing, as well as projection of images on vectorial spaces or singular value decomposition. More in detail, the processing may be carried out either by means of sequential computation procedures or by means of neural networks appropriately trained and fed with parameters extracted from the digital video streams.

In accordance with the present invention, components, procedure steps, algorithms and data structures can be implemented by using various types of operating systems, computational platforms, machine codes, programming languages, sensors and transducers, and other programmable electronic devices or devices having preset functionalities.

It will also be apparent to a man skilled in the art that devices of any programmable nature, such as ASICs (Application Specific Integrated Circuits), FPGAs (Field Programmable Gate Arrays), DSPs (Digital Signal Processors), DMAPs (Digital Media Application Processors) or modules based on such devices or the like may be used indifferently without departing from the scope and essence of the inventive concepts disclosed herein.

Preferably, system 100 comprises at least one vibration sensor (not numbered), e.g. an accelerometer, which is designed to be mounted on the support structure of machine 300 (whereon distance detector assemblies 101 and 102 are to be mounted), and which is configured to obtain information indicating the vibrations to which said distance detector assemblies 101 and 102 are subject; control means 104 are configured to modify the volume estimation as a function of said indicating information. In this manner, the calculation of the estimation of the volume of the object and of the setting elements will be "compensated for" by eliminating the effects of any vibrations induced by the operation of the operating apparatus of machine 300.

With reference to Figure 5, there is shown a further embodiment of the present invention, wherein system 500 comprises a pair a radar sensors designated as R, which are connected in a first distance detector assembly (or detection board) 501, in which an 8-bit microprocessor collects and processes the distance data. In another distance detector assembly (or other detection board) 502, infrared sensors IR are connected, which can detect the distances of the objects relative to their position. The data thus obtained and combined are then passed on to control means, designated as 503, via a CAN BUS communication channel 504.

The entry of an operator 505 in the monitored region of the drilling machine will trigger an acoustic and luminous warning signal, resulting in a reduction of the revolution and/or pull/thrust speeds of the drilling machine when the operator enters alert area 507 and in a complete stop of the operations when the operator enters danger area 508 near the operating apparatus of drilling machine 503.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Safety system (100; 500) to detect a risk condition in a region (400) to be monitored placed close to a drilling machine (300);
said system comprising sensor means (101, 102, 103, 105a, 105b, 106; 501, 502), to be mounted on a support structure (305, 306) of said drilling machine (300) and for detecting data representing the presence of a foreign object (505) located in said region (400) to be monitored placed close to a drilling tool (307) of said drilling machine (300), said sensor means comprising at least one distance detector assembly (101, 102; 501, 502), for detecting data representing the distance of said object (505) and of setting elements placed in said region (400) relative to said at least one distance detector assembly (101, 102; 501, 502), said setting elements being fixed objects or obstacles within said region (400); and
control means (104; 503), which are configured to:
- process said data provided by said sensor means (101, 102, 103, 105a, 105b, 106; 501, 502), and
- provide a control signal, should said data correspond to said risk condition concerning the presence of said object (505) in said region (400) to be monitored;
**said safety system being characterized in that**
said at least one distance detector assembly (101, 102; 501, 502) comprises a pair of different distance sensors (201, 202);
**and in that**
said control means (104; 503) are configured to:
- calculate an estimation of the volume occupied by said object (505) and by said setting elements belonging to said region (400) to be monitored as a function of said data,
- compare said calculated estimation and a preliminarily stored three-dimensional model concerning the volume occupied by the setting elements without the presence of said object (505), and
- assess whether between the calculated estimation and said three-dimensional model there is a variation corresponding to said risk condition according to predetermined criteria.

2. System according to claim 1, wherein said at least one distance detector assembly (101, 102; 501, 502) comprises at least one sensor selected in the group consisting of an infrared sensor (201), a radio wave sensor, an ultrasound sensor and a radar sensor (202).

3. System according to claim 1 or 2, wherein said pair of distance sensors comprises an infrared sensor (201) and a radar sensor (202).

4. System according to any of the previous claims, wherein said sensor means (101, 102; 501, 502) comprise at least one vibration sensor, to be mounted on said support structure (305) and configured to detect information indicating the vibrations to which said at least one distance detector assembly (101, 102; 501, 502) is subject; said control unit (107, 109; 503) being configured to correct the calculation of said estimation as a function of said indicating information.

5. System according to claim 4, wherein said at least one vibration sensor is an accelerometer.

6. System according to any of the previous claims, wherein said control unit (107, 109; 503) is configured to preliminarily calculate said three-dimensional model as a function of said data, when said object (505) is absent from said region (400) to be monitored.

7. System according to any of the previous claims, wherein said object is a person (505) standing in said region (400) to be monitored.

8. System according to claim 7, wherein said risk condition is determined by said control unit (107, 109; 503) when said variation is comparable to the one due to a predefined shape indicating the presence of said person (505) standing and preferably moving in said region (400) to be monitored.

9. System according to any of the previous claims, wherein said control signal comprises a perceivable signal, for example comprising at least one between an acoustic warning and a visual warning.

10. System according to any of the previous claims, wherein said control signal comprises a signal that is suited to be transmitted to said machine (300) so that it stops or limits the operation of said drilling tool (307).

11. Safety method to detect a risk condition in a region (400) to be monitored placed close to a drilling machine (300); said method comprising the following steps:
a) detecting data representing the presence of a foreign object (505) and located in said region placed close to a drilling tool (307) of said drilling machine (300);
b) processing said data, and
c) providing a control signal, should said data correspond to said risk condition concerning the presence of said object (505) in said region (400) to be monitored;
wherein said step a) comprises the following operations:
a1) detecting data representing the distance of said object (505) and of setting elements located in said region (400) to be monitored relative to a common reference; and
**characterized in that** said step b) comprises, furthermore, the following operations:
b1) calculating an estimation of the volume occupied by said object (505) and by said setting elements belonging to said region (400) to be monitored as a function of said data, said setting elements being fixed objects or obstacles within said region (400),
b2) comparing said calculated estimation and a preliminarily stored three-dimensional model concerning the volume occupied by the setting elements without the presence of said object (505), and
b3) assessing whether between the calculated estimation and said three-dimensional model there is a variation corresponding to said risk condition according to predetermined criteria;
wherein operation a1) is carried out by means of a pair of different distance sensors (201, 202).

12. Method according to claim 11, wherein operation a1) is carried out by means of at least one sensor selected in the group consisting of an infrared sensor (201), a radio wave sensor, an ultrasound sensor and a radar sensor (202).

13. Method according to claim 11 or 12, wherein operation a1) is carried out by means of an infrared sensor (201) and a radar sensor (202).

14. Method according to any of claims 11 to 13, wherein said step a) comprises, furthermore, the operation of
a2) detecting information indicating vibrations caused by said drilling tool (307);
in said operation b1), said estimation being corrected as a function of said indicating information.

15. Method according to claim 14, wherein said step a2) is carried out by means of an accelerometer.

16. Method according to any of claims 11 to 15, wherein before said steps a), b) and c) there is a calibration step, which comprises preliminarily calculating said three-dimensional model as a function of said data when said object (505) is absent from said region (400) to be monitored.

17. Method according to any of claims 11 to 16, wherein said object is a person (505) standing in said region (400) to be monitored.

18. Method according to claim 17, wherein, in said step c), said risk condition is determined when said variation is comparable to the one due to a predefined shape indicating the presence of said person (505) standing and preferably moving in said region (400) to be monitored.

19. Method according to any of claims 11 to 18, wherein, in said step c), said control signal comprises a perceivable signal, for example comprising at least one between an acoustic warning and a visual warning.

20. Method according to any of claims 11 to 19, wherein, in said step c), said control signal comprises a signal that is suited to be transmitted to said machine (300) so that it stops or limits the operation of said drilling tool (307) .

## Patentansprüche

1. Sicherheitssystem (100; 500) zum Erfassen eines Risikozustands in einer zu überwachenden Region (400), welche nahe einer Bohrmaschine (300) angeordnet ist; wobei das System aufweist
Sensormittel (101, 102, 103, 105a, 105b, 106; 501, 502), die an einer Stützstruktur (305, 306) der Bohrmaschine (300) anzubringen sind und zum Erfassen von Daten dienen, welche die Anwesenheit eines Fremdobjekts (505) repräsentieren, welches sich in der zu überwachenden Region (400) befindet, welche nahe einem Bohrwerkzeug (307) der Bohrmaschine (300) angeordnet ist,
wobei die Sensormittel zumindest eine Abstandserfasserbaugruppe (101, 102; 501, 502) aufweisen, welche zum Erfassen von Daten dient, welche den Abstand des Objekts (505) und von Einstellelementen repräsentieren, welche in der Region (400) relativ zu der zumindest einen Abstandserfasserbaugruppe (101, 102; 501, 502) angeordnet sind, wobei die Einstellelemente festgelegte Objekte oder Hindernisse innerhalb der Region (400) sind; und
Steuerungsmittel (104; 503), welche dazu konfiguriert sind:
- die Daten zu verarbeiten, welche durch die Sensormittel (101, 102, 103, 105a, 105b, 106; 501, 502) bereitgestellt werden, und
- ein Steuerungssignal bereitzustellen, sollten die Daten dem Risikozustand betreffend die Anwesenheit des Objekts (505) in der zu überwachenden Region (400) entsprechen;
**wobei das Sicherheitssystem dadurch gekennzeichnet ist, dass**
die zumindest eine Abstandserfasserbaugruppe (101, 102; 501, 502) ein Paar unterschiedlicher Abstandssensoren (201, 202) aufweist;
**und dadurch, dass**
die Steuerungsmittel (104; 503) dazu konfiguriert sind:
- eine Schätzung des Volumens, welches durch das Objekt (505) und durch die Einstellelemente belegt wird, welche zu der zu überwachenden Region (400) gehören, als eine Funktion der Daten zu berechnen,
- die berechnete Schätzung und ein vorläufig gespeichertes dreidimensionales Modell zu vergleichen, welches das durch die Einstellelemente ohne die Anwesenheit des Objekts (505) belegte Volumen betrifft, und
- zu beurteilen, ob es zwischen der berechneten Schätzung und dem dreidimensionalen Modell eine Abweichung entsprechend dem Risikozustand gemäß vorab bestimmter Kriterien gibt.

2. System gemäß dem Anspruch 1, wobei die zumindest eine Abstandserfasserbaugruppe (101, 102; 501, 502) zumindest einen Sensor aufweist, welcher in der Gruppe gewählt ist, welche aus einem Infrarotsensor (201), einem Funkwellensensor, einem Ultraschallsensor und einem Radarsensor (202) besteht.

3. System gemäß dem Anspruch 1 oder 2, wobei das Paar Abstandssensoren einen Infrarotsensor (201) und einen Radarsensor (202) aufweist.

4. System gemäß einem beliebigen der vorstehenden Ansprüche, wobei die Sensormittel (101, 102; 501, 502) zumindest einen Vibrationssensor aufweisen, welcher an der Stützstruktur (305) anzubringen und dazu konfiguriert ist, eine Information zu erfassen, welche die Vibrationen anzeigt, welchen die zumindest eine Abstandserfasserbaugruppe (101, 102; 501, 502) unterworfen ist; wobei die Steuerungseinheit (107, 109; 503) dazu konfiguriert ist, die Berechnung der Schätzung als eine Funktion der anzeigenden Information zu korrigieren.

5. System gemäß dem Anspruch 4, wobei der zumindest eine Vibrationssensor ein Beschleunigungsmesser ist.

6. System gemäß einem beliebigen der vorstehenden Ansprüche, wobei die Steuerungseinheit (107, 109; 503) dazu konfiguriert ist, vorläufig das dreidimensionale Modell als eine Funktion der Daten zu berechnen, wenn das Objekt (505) aus der zu überwachenden Region (400) abwesend ist.

7. System gemäß einem beliebigen der vorstehenden Ansprüche, wobei das Objekt eine Person (505) ist, welche in der zu überwachenden Region (400) steht.

8. System gemäß dem Anspruch 7, wobei der Risikozustand durch die Steuerungseinheit (107, 109; 503) bestimmt wird, wenn die Abweichung vergleichbar ist zu der einen wegen einer vordefinierten Form, welche die Anwesenheit der Person (505) anzeigt, welche in der zu überwachenden Region (400) steht und vorzugsweise sich bewegt.

9. System gemäß einem beliebigen der vorstehenden Ansprüche, wobei das Steuerungssignal ein wahrnehmbares Signal aufweist, welches zum Beispiel zumindest eine Warnung unter einer akustischen Warnung und einer visuellen Warnung aufweist.

10. System gemäß einem beliebigen der vorstehenden Ansprüche, wobei das Steuerungssignal ein Signal aufweist, welches dazu angepasst ist, zu der Maschine (300) übermittelt zu werden, sodass es den Betrieb des Bohrwerkzeugs (307) stoppt oder begrenzt.

11. Sicherheitsverfahren zum Erfassen eines Risikozustands in einer zu überwachenden Region (400), welche nahe einer Bohrmaschine (300) angeordnet ist; wobei das Verfahren die folgenden Schritte aufweist:
a) Erfassen von Daten, welche die Anwesenheit eines Fremdobjekts (505) repräsentieren, und das sich in der Region befindet, welche nahe einem Bohrwerkzeug (307) der Bohrmaschine (300) angeordnet ist;
b) Verarbeiten der Daten, und
c) Bereitstellen eines Steuerungssignals, sollten die Daten dem Risikozustand entsprechen, welcher die Anwesenheit des Objekts (505) in der zu überwachenden Region (400) betrifft;
wobei der Schritt a) die folgenden Betätigungen aufweist:
a1) Erfassen von Daten, welche den Abstand des Objekts (505) und von Einstellelementen repräsentieren, welche sich in der zu überwachenden Region (400) befinden, und zwar relativ zu einer gemeinsamen Referenz; und
**dadurch gekennzeichnet, dass** der Schritt b) darüber hinaus die folgenden Betätigungen aufweist:
b1) Berechnen einer Schätzung des Volumens, welches durch das Objekt (505) und durch die Einstellelemente belegt ist, welche zu der zu überwachenden Region (400) gehören, und zwar als eine Funktion der Daten, wobei die Einstellelemente festgelegte Objekte oder Hindernisse innerhalb der Region (400) sind,
b2) Vergleichen der berechneten Schätzung und eines vorläufig gespeicherten dreidimensionalen Modells betreffend das durch die Einstellelemente ohne die Anwesenheit des Objekts (505) belegte Volumen, und
b3) Beurteilen, ob es zwischen der berechneten Schätzung und dem dreidimensionalen Modell eine Abweichung entsprechend dem Risikozustand gemäß vorab bestimmter Kriterien gibt;
wobei Betätigung a1) mittels eines Paars unterschiedlicher Abstandssensoren (201, 202) ausgeführt wird.

12. Verfahren gemäß dem Anspruch 11, wobei die Betätigung a1) mittels zumindest eines Sensors ausgeführt wird, welcher in der Gruppe gewählt ist, welche aus einem Infrarotsensor (201), einem Funkwellensensor, einem Ultraschallsensor und einem Radarsensor (202) besteht.

13. Verfahren gemäß dem Anspruch 11 oder 12, wobei die Betätigung a1) mittels eines Infrarotsensors (201) und eines Radarsensors (202) ausgeführt wird.

14. Verfahren gemäß einem beliebigen der Ansprüche 11 bis 13, wobei der Schritt a) darüber hinaus aufweist die Betätigung
a2) Erfassen einer Information, welche durch das Bohrwerkzeug (307) verursachte Vibrationen anzeigt;
wobei in der Betätigung b1) die Schätzung als eine Funktion der anzeigenden Information korrigiert wird.

15. Verfahren gemäß dem Anspruch 14, wobei der Schritt a2) mittels eines Beschleunigungsmessers ausgeführt wird.

16. Verfahren gemäß einem beliebigen der Ansprüche 11 bis 15, wobei es vor den Schritten a), b) und c) einen Kalibrierungsschritt gibt, welcher aufweist ein vorläufiges Berechnen des dreidimensionalen Modells als eine Funktion der Daten, wenn das Objekt (505) aus der zu überwachenden Region (400) abwesend ist.

17. Verfahren gemäß einem beliebigen der Ansprüche 11 bis 16, wobei das Objekt eine Person (505) ist, welche in der zu überwachenden Region (400) steht.

18. Verfahren gemäß Anspruch 17, wobei in dem Schritt c) der Risikozustand bestimmt wird, wenn die Abweichung vergleichbar ist zu der einen wegen einer vordefinierten Form, welche die Anwesenheit der Person (505) anzeigt, welche in der zu überwachenden Region (400) steht und vorzugsweise sich bewegt.

19. Verfahren gemäß einem beliebigen der Ansprüche 11 bis 18, wobei in dem Schritt c) das Steuerungssignal ein wahrnehmbares Signal aufweist, welches zum Beispiel zumindest eine Warnung unter einer akustischen Warnung und einer visuellen Warnung aufweist.

20. Verfahren gemäß einem beliebigen de Ansprüche 11 bis 19, wobei in dem Schritt c) das Steuerungssignal ein Signal aufweist, welches dazu angepasst ist, zu der Maschine (300) übermittelt zu werden, sodass es den Betrieb des Bohrwerkzeugs (307) stoppt oder begrenzt.

## Revendications

1. Système de sécurité (100 ; 500) pour détecter une condition de risque dans une zone (400) à surveiller placée à proximité d'une machine de forage (300) ; ledit système comprenant
des moyens capteurs (101, 102, 103, 105a, 105b, 106 ; 501, 502), destinés à être montés sur une structure de support (305, 306) de ladite machine de forage (300) et à détecter des données représentant la présence d'un corps étranger (505) situé dans ladite zone (400) à surveiller placé à proximité d'un outil de forage (307) de ladite machine de forage (300), lesdits moyens capteurs comprenant au moins un ensemble détecteur de distance (101, 102 ; 501, 502), pour détecter des données représentant la distance dudit objet (505) et d'éléments de réglage placés dans ladite zone (400) par rapport au dit au moins un ensemble détecteur de distance (101, 102 ; 501, 502), lesdits éléments de réglage étant des objets ou obstacles fixes dans ladite zone (400) ; et des moyens de commande (104 ; 503), qui sont configurés pour :
- traiter lesdites données fournies par lesdits moyens capteurs (101, 102, 103, 105a, 105b, 106 ; 501, 502), et
- fournir un signal de commande, si lesdites données correspondent à ladite condition de risque concernant la présence dudit objet (505) dans ladite zone (400) à surveiller ;
ledit système de sécurité étant **caractérisé en ce que** ledit au moins un ensemble détecteur de distance (101, 102 ; 501, 502) comprend une paire de capteurs de distance différents (201, 202) ; et **en ce que** lesdits moyens de commande (104 ; 503) sont configurés pour :
- calculer une estimation du volume occupé par ledit objet (505) et par lesdits éléments de réglage appartenant à ladite zone (400) à surveiller en fonction desdites données,
- comparer ladite estimation calculée et un modèle tridimensionnel stocké préalablement concernant le volume occupé par les éléments de réglage sans la présence dudit objet (505), et
- évaluer s'il existe, entre l'estimation calculée et ledit modèle tridimensionnel, une variation correspondant à ladite condition de risque selon des critères prédéterminés, ou non.

2. Système selon la revendication 1, dans lequel ledit au moins un ensemble détecteur de distance (101, 102 ; 501, 502) comprend au moins un capteur choisi dans le groupe constitué par un capteur infrarouge (201), un capteur à ondes radio, un capteur à ultrasons et un capteur radar (202) .

3. Système selon la revendication 1 ou 2, dans lequel ladite paire de capteurs de distance comprend un capteur infrarouge (201) et un capteur radar (202).

4. Système selon l'une quelconque des revendications précédentes, dans lequel lesdits moyens capteurs (101, 102 ; 501, 502) comprennent au moins un capteur de vibration, destiné à être monté sur ladite structure de support (305) et configuré pour détecter des informations indiquant les vibrations auxquelles est soumis ledit au moins un ensemble détecteur de distance (101, 102 ; 501, 502) ; ladite unité de commande (107, 109 ; 503) étant configurée pour corriger le calcul desdites estimations en fonction desdites informations donnant les indications.

5. Système selon la revendication 4, dans lequel ledit au moins un capteur de vibrations est un accéléromètre.

6. Système selon l'une quelconque des revendications précédentes, dans lequel ladite unité de commande (107, 109 ; 503) est configurée pour calculer préalablement ledit modèle tridimensionnel en fonction desdites données, lorsque ledit objet (505) est absent de ladite zone (400) à surveiller.

7. Système selon l'une quelconque des revendications précédentes, dans lequel ledit objet est une personne (505) se tenant debout dans ladite zone (400) à surveiller.

8. Système selon la revendication 7, dans lequel ladite condition de risque est déterminée par ladite unité de commande (107, 109 ; 503) lorsque ladite variation est comparable à celle due à une forme prédéfinie indiquant la présence de ladite personne (505) debout et de préférence mobile dans ladite zone (400) à surveiller.

9. Système selon l'une quelconque des revendications précédentes, dans lequel ledit signal de commande comprend un signal perceptible, comprenant par exemple au moins un signal entre un avertissement acoustique et un avertissement visuel.

10. Système selon l'une quelconque des revendications précédentes, dans lequel ledit signal de commande comprend un signal qui est apte à être transmis à ladite machine (300) de sorte qu'il arrête ou limite le fonctionnement dudit outil de forage (307).

11. Procédé de sécurité pour détecter une condition de risque dans une zone (400) à surveiller placée à proximité d'une machine de forage (300) ; ledit procédé comprenant les étapes suivantes :
a) détecter des données représentant la présence d'un corps étranger (505) et situé dans ladite zone à proximité d'un outil de forage (307) de ladite machine de forage (300) ;
b) le traitement desdites données, et
c) fournir un signal de commande, si lesdites données correspondent à ladite condition de risque concernant la présence dudit objet (505) dans ladite zone (400) à surveiller ;
dans laquelle ladite étape a) comprend les opérations suivantes :
a1) détecter des données représentant la distance dudit objet (505) et des éléments de réglage situés dans ladite zone (400) à surveiller par rapport à une référence commune ; et **caractérisé en ce que** ladite étape b) comprend en outre les opérations suivantes :
b1) calculer une estimation du volume occupé par ledit objet (505) et par lesdits éléments de réglage appartenant à ladite zone (400) à surveiller en fonction desdites données, lesdits éléments de réglage étant des objets ou obstacles fixes dans ladite zone (400),
b2) comparer ladite estimation calculée et un modèle tridimensionnel stocké préalablement concernant le volume occupé par les éléments de réglage sans la présence dudit objet (505), et
b3) évaluer s'il existe, entre l'estimation calculée et ledit modèle tridimensionnel, une variation correspondant à ladite condition de risque selon les critères prédéterminés, ou non ;
dans laquelle l'opération a1) est effectuée au moyen de la paire de différents capteurs de distance (201, 202).

12. Procédé selon la revendication 11, dans lequel l'opération a1) est réalisée au moyen d'au moins un capteur choisi dans le groupe constitué par un capteur infrarouge (201), un capteur à ondes radio, un capteur à ultrasons et un capteur radar (202).

13. Procédé selon la revendication 11 ou 12, dans lequel l'opération a1) est réalisée au moyen d'un capteur infrarouge (201) et d'un capteur radar (202).

14. Procédé selon l'une quelconque des revendications 11 à 13, dans lequel ladite étape a) comprend en outre, l'opération consistant à
a2) détecter des informations indiquant des vibrations provoquées par ledit outil de forage (307) ;
dans ladite opération b1), ladite estimation étant corrigée en fonction desdites informations donnant les indications.

15. Procédé selon la revendication 14, dans lequel ladite étape a2) est réalisée au moyen d'un accéléromètre.

16. Procédé selon l'une quelconque des revendications 11 à 15, dans lequel, avant lesdites étapes a), b) et c), il y a une étape d'étalonnage, qui comprend le calcul préalable dudit modèle tridimensionnel en fonction desdites données lorsque ledit objet (505) est absent de ladite zone (400) à surveiller.

17. Procédé selon l'une quelconque des revendications 11 à 16, dans lequel ledit objet est une personne (505) debout dans ladite zone (400) à surveiller.

18. Procédé selon la revendication 17, dans lequel, dans ladite étape c), ladite condition de risque est déterminée lorsque ladite variation est comparable à celle due à une forme prédéfinie indiquant la présence de ladite personne (505) debout et de préférence mobile dans ladite zone (400) à surveiller.

19. Procédé selon l'une quelconque des revendications 11 à 18, dans lequel, dans ladite étape c), ledit signal de commande comprend un signal perceptible, comprenant par exemple au moins un signal entre un avertissement acoustique et un avertissement visuel.

20. Procédé selon l'une quelconque des revendications 11 à 19, dans lequel, dans ladite étape c), ledit signal de commande comprend un signal qui est apte à être transmis à ladite machine (300) de sorte qu'il arrête ou limite le fonctionnement dudit outil de forage (307).
